# FASCICULE DE BREVET EUROPEEN

(11) **EP 2 358 616 B1**
(45) Date de publication et mention de la délivrance du brevet: **03.10.2012**
(21) Numéro de dépôt: 09759955.9
(22) Date de dépôt: 27.11.2009
(51) Int. Cl.: B65G 51/28, B65G 51/04, G07D 9/00

(54) **STATION ET METHODE DE TRANSFERT POUR CARTOUCHE PNEUMATIQUE**
TRANSFERSTATION UND VERFAHREN FÜR EINEN PNEUMATISCHEN GUTTRÄGER
TRANSFER STATION AND METHOD FOR A PNEUMATIC CARTRIDGE

(30) Priorité: 01.12.2008 FR 0858153
(43) Date de publication de la demande: 24.08.2011
(73) Titulaire: SNEF, 13015 Marseille (FR); Gatto, Dominique, 06000 Nice (FR); Renoux, Frédéric, 06000 Nice (FR)
(72) Inventeur: GATTO, Dominique, F-06000 Nice (FR); RENOUX, Frédéric, F-06000 Nice (FR)
(74) Mandataire: Decobert, Jean-Pascal
(86) Numéro de dépôt international: PCT/EP2009/065952
(87) Numéro de publication internationale: WO 2010/063646

(56) Documents cités:
- WO-A-84/00945
- WO-A-2007/084874
- DE-A1- 19 714 507

## Description

La présente invention concerne une station de transfert apte à recevoir une cartouche pneumatique.

Elle concerne également une méthode utilisant une telle station.

L'invention trouve son application dans le domaine des installations de convoyage pneumatique utilisant des cartouches du type comprenant un corps délimitant une enceinte de réception de produits et au moins un couvercle à l'une des extrémités du corps, le couvercle étant pivotant suivant un axe parallèle à l'axe longitudinal de la cartouche. Ce type d'installation est notamment exploité pour le convoyage d'argent liquide sous forme de billets ou de pièces de monnaie. La station de transfert proposée peut être utilisée, de façon non limitative, au niveau d'une zone de réception et d'envoi des cartouches.

Une installation de convoyage pneumatique comporte usuellement un réseau de tubes avec une variation de pression d'un fluide (tel de l'air) pour entraîner des containers généralement sous forme de cartouche dont le volume intérieur reçoit les objets à transporter. A l'envoi ou à la réception, les containers sont sujets à des phases d'ouverture et de fermeture pour réaliser l'admission et l'évacuation des objets contenus dans l'enceinte du container.

Une forme de container usuelle consiste en une cartouche d'enveloppe globalement cylindrique fermée à ses deux extrémités. A au moins l'une d'entre elles la fermeture s'opère par un couvercle monté pivotant selon un axe parallèle à l'axe longitudinal du container. L'ouverture et ia fermeture sont des phases d'intervention d'un manipulateur. On a cependant cherché à automatiser ces étapes notamment selon l'enseignement de la publication WO - A1 - 8400945 qui divulgue une cartouche destinée à des transports de fluide et comportant des moyens de fermeture par clapet rétractable élastiquement dans le volume intérieur de la cartouche. L'automatisation de l'ouverture et de la fermeture de la cartouche est ici possible au prix d'une importante complication de la conception de la cartouche qui n'est pas d'un type standard et dont le clapet est mobile suivant un pivot d'axe orienté orthogonalement à l'axe longitudinal de l'enveloppe de la cartouche.

Présentant les mêmes désavantages, le document DE 197 14 507 A1 décrit une station de transfert selon le préambule de la revendication 1. L'ouverture et la fermeture de la cartouche y sont réalisées automatiquement par une butée mobile.

Il existe donc le besoin d'améliorer les phases d'ouverture et de fermeture de container pour convoyage sans pour autant engendrer une complication du container grevant le prix de revient et la simplicité d'utilisation. L'invention s'inscrit dans ce cadre et propose à cet effet une station de transfert selon la revendication 1, apte à recevoir une cartouche pneumatique munie d'un couvercle monté pivotant suivant un axe parallèle à l'axe longitudinal de la cartouche. Ce type de cartouche est très largement répandu dans le domaine du convoyage pneumatique.

La présente invention permet donc d'utiliser ce type de cartouche traditionnelle et dans le même temps de mettre en place des moyens fiables et peu complexes pour réaliser l'ouverture et la fermeture du couvercle. Suivant une possibilité avantageuse, l'invention est telle que l'ouverture du couvercle s'effectue simultanément à une phase de modification de la position de la cartouche entre une zone de transit et une zone de chargement. Par mutualisation de moyens, on limite ainsi les moyens spécifiques nécessaires à la mise en oeuvre de l'ouverture et de la fermeture du couvercle.

D'autres buts et avantages apparaîtront au cours de la description qui suit qui présente un mode de réalisation préféré de l'invention cependant non limitatif.

Auparavant il est indiqué que la présente invention concerne une station de transfert apte à recevoir une cartouche pneumatique munie d'un couvercle monté pivotant suivant un axe parallèle à l'axe longitudinal de la cartouche a station comportant une zone de transit de la cartouche apte à coopérer avec un circuit de convoyage pneumatique, comportant une butée configurée pour pousser le couvercle de la cartouche depuis une position fermée vers une position ouverte, caractérisée en ce que la butée est fixe et la station comporte des moyens de déplacement de la cartouche suivant un plan orthogonal à son axe longitudinal.

Suivant des modes de réalisation préférés mais non limitatifs, cette station est telle que :
- avantageusement, la butée est positionnée sur la trajectoire du centre du couvercle afin d'éviter un couple de rotation de la cartouche risquant d'empêcher l'ouverture du couvercle.
- les moyens de déplacement sont des moyens de débattement angulaire,
- la butée est positionnée sur la trajectoire en rotation du centre de gravité du couvercle,
- les moyens de débattement angulaire comportent un barillet d'entraînement de la cartouche,
- la station comporte des moyens de mise en rotation propre de la cartouche autour de son axe longitudinal jusqu'à une position prédéterminée de l'axe de pivot du couvercle,
- elle comporte aussi une zone de chargement, les moyens de déplacement étant configurés pour déplacer la cartouche entre la zone de transit et la zone de chargement,
- la zone de chargement comporte une entrée de produit et des moyens d'obturation de l'entrée commandés de sorte à s'escamoter lorsque la cartouche est située en vis-à-vis de l'entrée,
- les moyens d'obturation sont commandés par des moyens d'entraînement solidarisés au barillet,
- les moyens d'entraînement comportent un chemin de guidage d'un doigt solidaire d'un capot des moyens d'obturation,
- la station comporte une voie d'introduction manuelle d'une cartouche dans la zone de transit,
- la station présente une butée complémentaire configurée pour pousser le couvercle de la cartouche depuis la position ouverte vers la position fermée,
- la butée complémentaire est localisée dans ia zone de transit,
- la station comporte un plateau mobile entre une position d'ouverture de l'embouchure de la zone de transit et une position de fermeture.

L'invention concerne également un procédé de chargement d'une cartouche pneumatique utilisant une station de transfert selon l'invention et comportant les étapes suivantes : réception de la cartouche dans la zone de transit, mise en rotation propre de la cartouche de sorte à lui conférer une portion angulaire prédéterminée, et ,déplacement de la cartouche selon un plan orthogonal à son axe longitudinal et, simultanément, mise en appui du couvercle de la cartouche sur une butée pour pousser le couvercle depuis une position fermée vers une position ouverte.

Selon une possibilité, le procédé est tel que le déplacement de la cartouche est configuré pour autoriser l'introduction manuelle d'une autre cartouche dans la zone de transit.

Les dessins ci-joints sont donnés à titre d'exemples et ne sont pas limitatifs de l'invention. Ils représentent seulement un mode de réalisation de l'invention et permettront de la comprendre aisément.

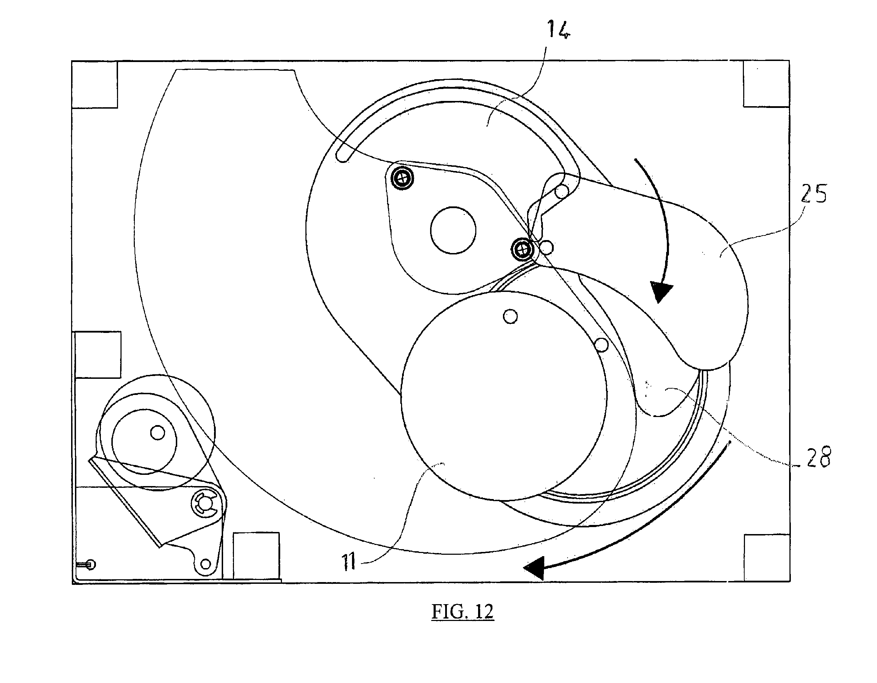

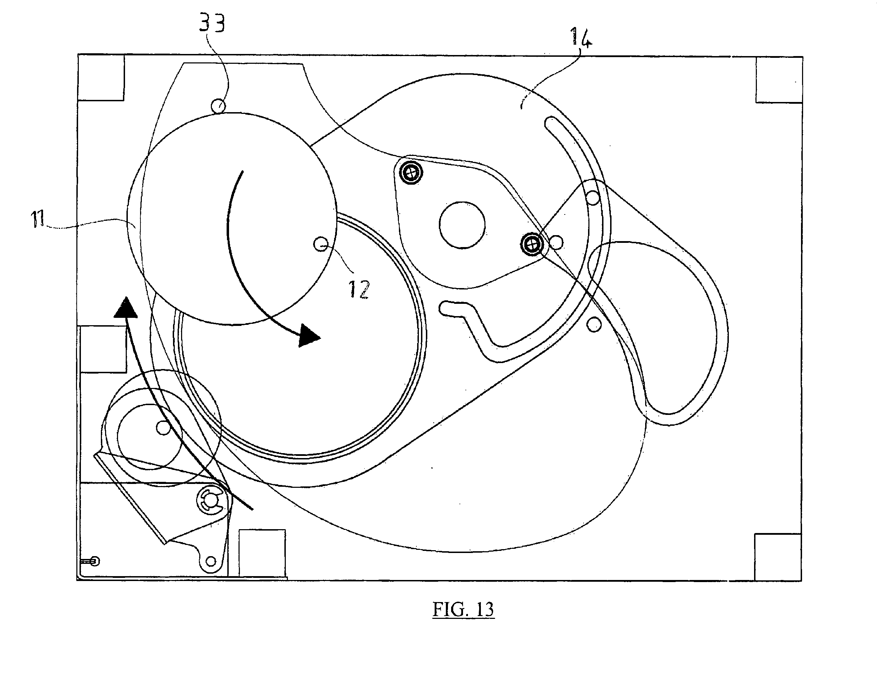

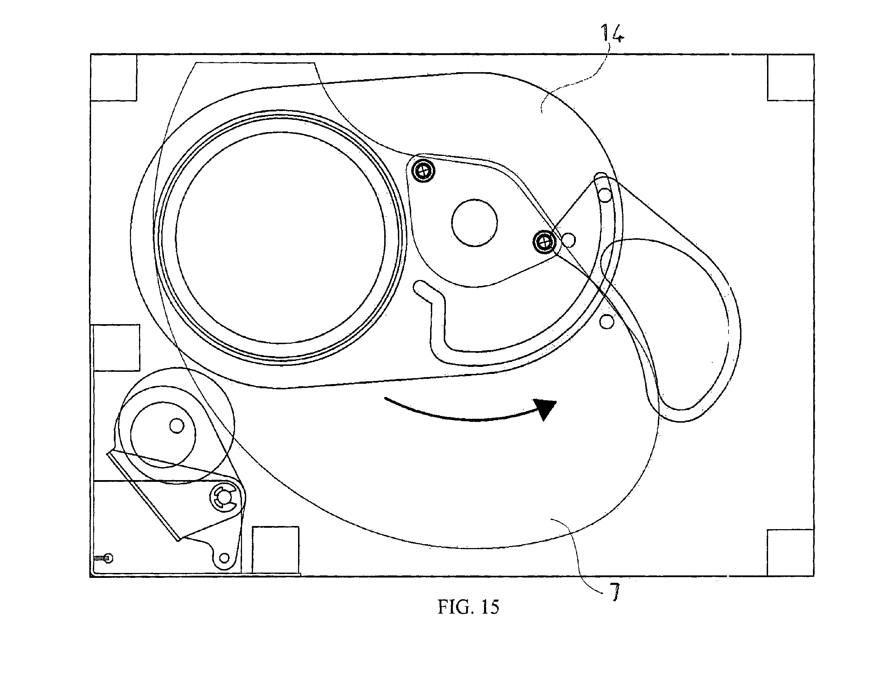

Les figures 1 à 16 présentent des phases successives de fonctionnement de la station de l'invention suivant un premier mode de réalisation.
La figure 1 représente une position d'attente de la station au cours de laquelle une cartouche peut être admise.
La figure 2 montre en coupe transversale une phase de réception d'une cartouche dans la zone de transit.
Les figures 3 et 4 montrent des phases successives d'amenée de la cartouche à une zone de réglage de son orientation angulaire.
Les figures 5 et 6 illustrent la phase de réglage de la position angulaire.
Les figures 7 à 10 montrent des phases successives de déplacement de la cartouche, d'ouverture du couvercle et de coopération avec la zone de chargement.
La figure 11 est une coupe transversale de la station avec une cartouche en phase de chargement.
Les figures 12 à 15 illustrent un mouvement inverse de retour de la cartouche vers la zone de transit.
La figure 16 illustre le retour en position initiale de la station prête à recevoir une nouvelle cartouche.
Les figures 17 à 20 illustrent des phases successives de fonctionnement de la station selon un deuxième mode de réalisation.

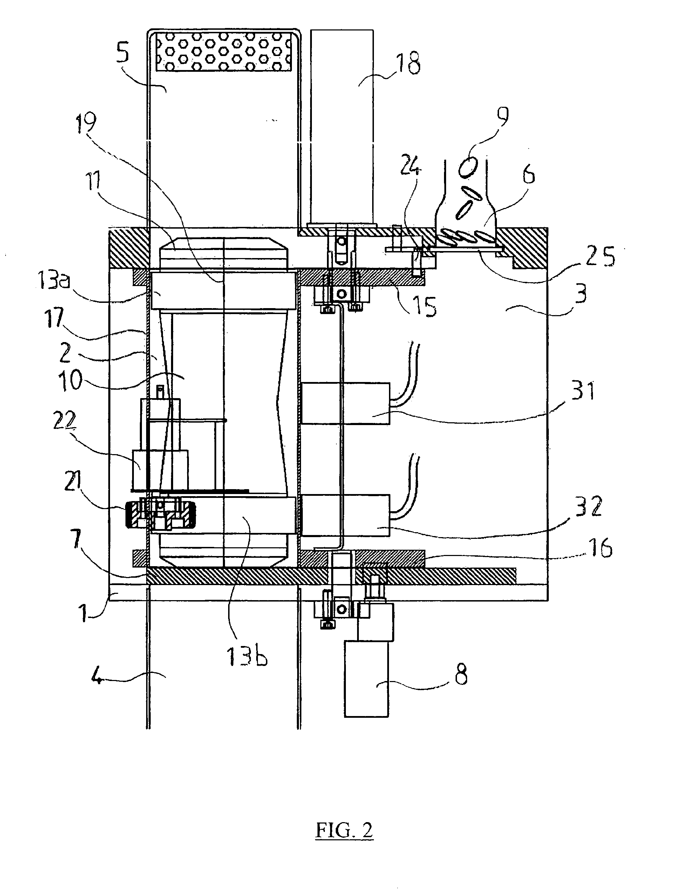

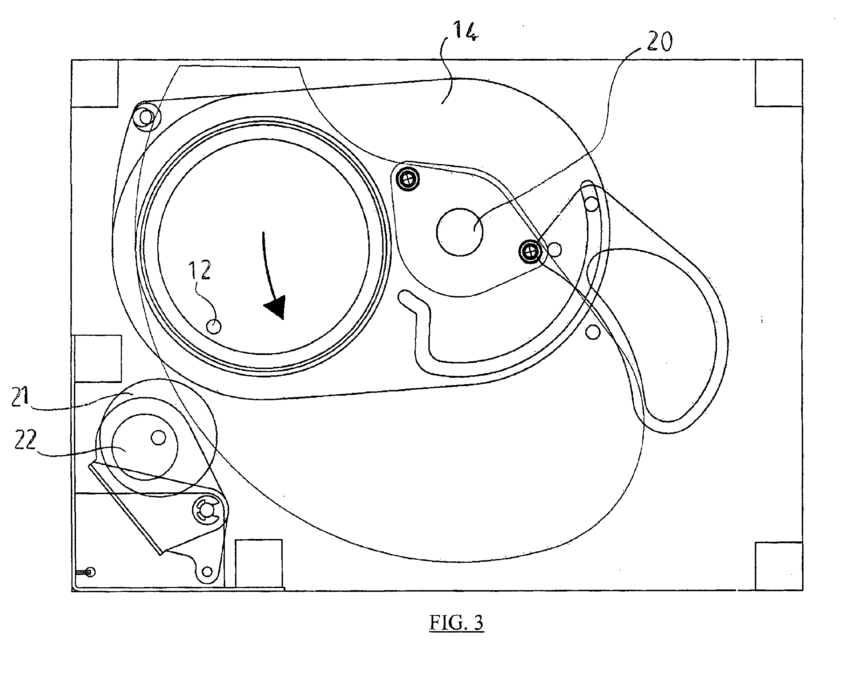

Dans l'exemple visible en figure 2, une cartouche 10 utilisable avec l'invention comporte un corps sensiblement cylindrique d'axe longitudinal 19. La cartouche 10 peut également comprendre deux bagues 13a, 13b à proximité de ses extrémités de sorte à constituer des éléments de guidage et d'étanchéité le long du circuit pneumatique. La cartouche 10 comporte au moins un couvercle 11 monté pivotant suivant un axe 12 par exemple visible en figure 3. L'axe 12 étant sensiblement parallèle à l'axe longitudinal 19. L'axe 12 est généralement présent à proximité de la bordure du corps de la cartouche 10. Suivant une possibilité, le mouvement de pivot d'ouverture du couvercle 11 s'effectue à l'encontre de moyens de rappel élastiques, par exemple sous forme d'un ressort de torsion, de sorte que, par défaut, le couvercle 11 reste en position fermée. Cette solution n'est cependant pas limitative de l'invention.

A noter que l'extrémité inférieure de la cartouche 10 peut également comprendre un couvercle du type précédemment décrit. Dans une alternative, l'extrémité inférieure de la cartouche 10 est simplement fermée.

Toujours en référence à la figure 2, la station ici présentée comporte une zone de transit 2 et une zone de chargement 3. La zone de transit 2 est la partie de la station par laquelle s'effectue l'émission et la réception des cartouches 10 relativement au circuit de convoyage pneumatique. A cet effet, la zone de chargement 3 comporte une embouchure 4 reliant la station et le circuit pneumatique. A l'opposé de l'embouchure 4, une portion d'arrêt 5 limite la possibilité de mouvement de la cartouche 10 à l'arrivée dans la station et comporte avantageusement un élément d'amortissement. D'une façon générale, l'ensemble de la station peut être délimité par une enceinte 1 au niveau de laquelle est reçue la cartouche 10 durant les différentes phases de fonctionnement.

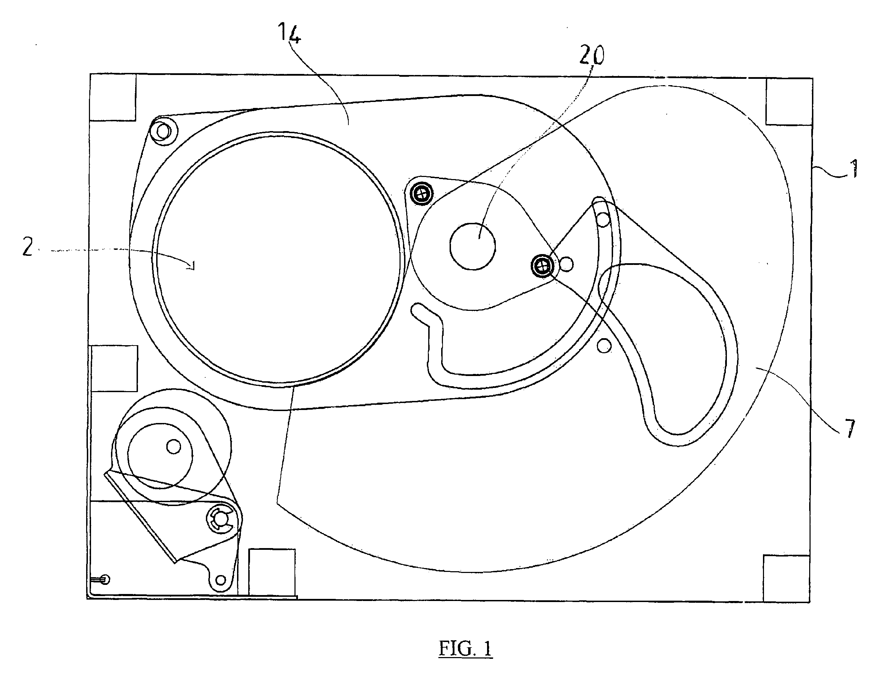

La zone de transit 2 peut être découplée du circuit de convoyage pneumatique par l'intermédiaire d'un plateau 7 et visible en coupe en figure 2 et en vue de dessus en figure 1, le plateau 7 étant mobile pour passer d'une position d'ouverture de l'embouchure 4 à une position de fermeture et inversement.

Suivant le cas illustré, la mobilité du plateau 7 est assurée par une motorisation 8 montée relativement à l'enceinte 1.

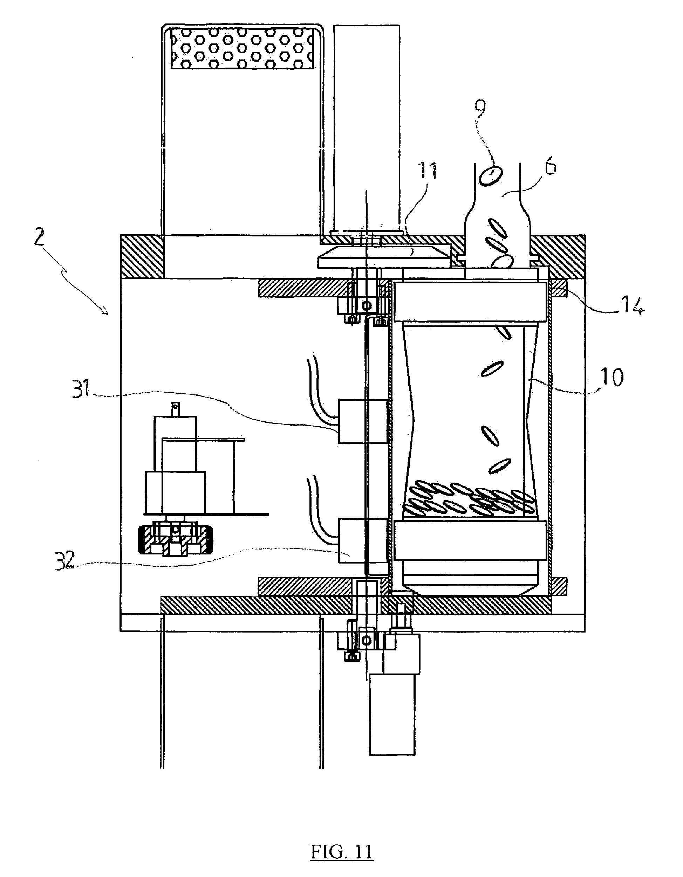

La station du mode de réalisation illustré comporte par ailleurs une zone de chargement 3 au niveau de laquelle la cartouche 10 est remplie. A titre d'exemple, on a représenté des produits 9 sous forme de pièces de monnaie aptes à être introduits par l'extrémité supérieure de la cartouche 10 lorsque le couvercle 11 est escamoté. Une position d'attente de cartouche est représentée en figure 1 et une position d'entrée des produits 9 dans le volume intérieur de la cartouche 10 est représentée en figure 11. La zone de chargement 3 comporte une entrée 6 située vers le dessus de l'enceinte 1 et dotée de moyens d'obturation comportant dans le cas représenté un capot 25 mobile entre une position de fermeture et une position d'ouverture de la bouche 28 de l'entrée 6.

Pour faire passer la cartouche 10 entre la zone de transit 2 et la zone de chargement 3, le cas illustré comporte un barillet 14 délimitant un réceptacle 17 pour recevoir la cartouche 10. A ses extrémités, le réceptacle 17 est délimité par un flasque supérieur 15 et un flasque inférieur 16. L'ensemble constitue un élément cinématique actionné de sorte à déplacer la cartouche 10 suivant une direction perpendiculaire à son axe longitudinal 19. Dans le mode de réalisation illustré, ce déplacement s'effectue en rotation au moyen d'une motorisation 18 par exemple située sur la paroi supérieure de l'enceinte 1.

A noter que les flasques supérieur et inférieur 15, 16 comportent une ouverture de sorte à autoriser le déplacement de la cartouche 10 en admission et en envoi.

Selon l'invention, le couvercle 11 de la cartouche 10 peut être ouvert sans avoir recours à une manipulation de l'opérateur. A cet effet, la station comporte des moyens pour déplacer le couvercle 11 relativement à la cartouche 10.

Selon l'invention , c'est la cartouche 10 qui est déplacée alors que le couvercle 11 vient en appui sur une butée 30 fixe relativement à l'enceinte 1.

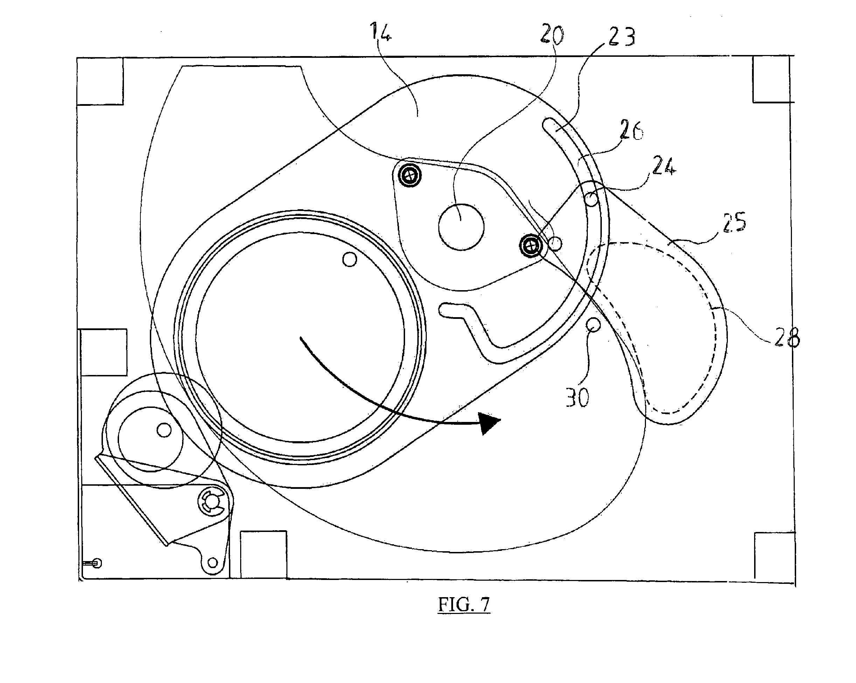

La butée 30 apparaît notamment aux figures 7 à 10, figures au niveau desquelles est visualisé le pivot du couvercle 11 par l'intermédiaire de son axe 12 du fait de l'appui sur la butée 30 alors que le barillet 14 a déplacé en rotation le reste de la cartouche 10.

On décrit ci-après un mode de fonctionnement de la station de l'invention en référence aux diverses figures.

La figure 1 montre une position de la station en attente de réception d'une cartouche 10. A cet effet, le barillet 14 est positionné angulairement de sorte à être présent au niveau de la zone de transit 2. Le plateau 7 est escamoté relativement à l'embouchure 4 pour permettre le passage d'une cartouche 10.

En figure 2, une cartouche 10 a été reçue et le plateau 7 positionné de sorte à obturer l'embouchure 4 et à éviter la retombée de la cartouche 10. Celle-ci se trouve donc en appui sur la surface supérieure du plateau 7 et coopère avec le barillet 14. Grâce à ce dernier, la cartouche 10 est déplacée suivant un secteur angulaire limité de sorte à atteindre des moyens de mise en rotation propre de la cartouche 10 autour de son axe longitudinal 19.

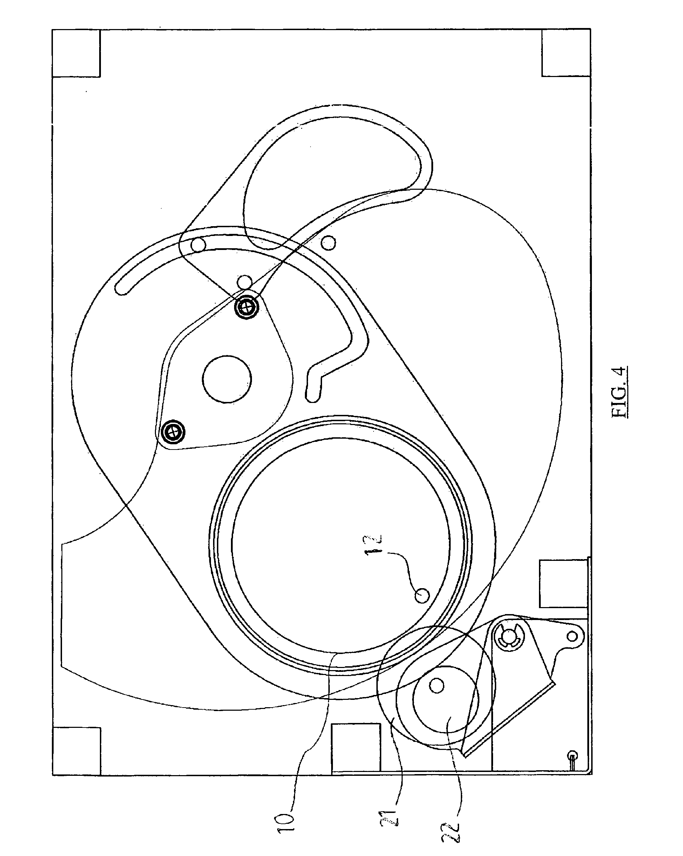

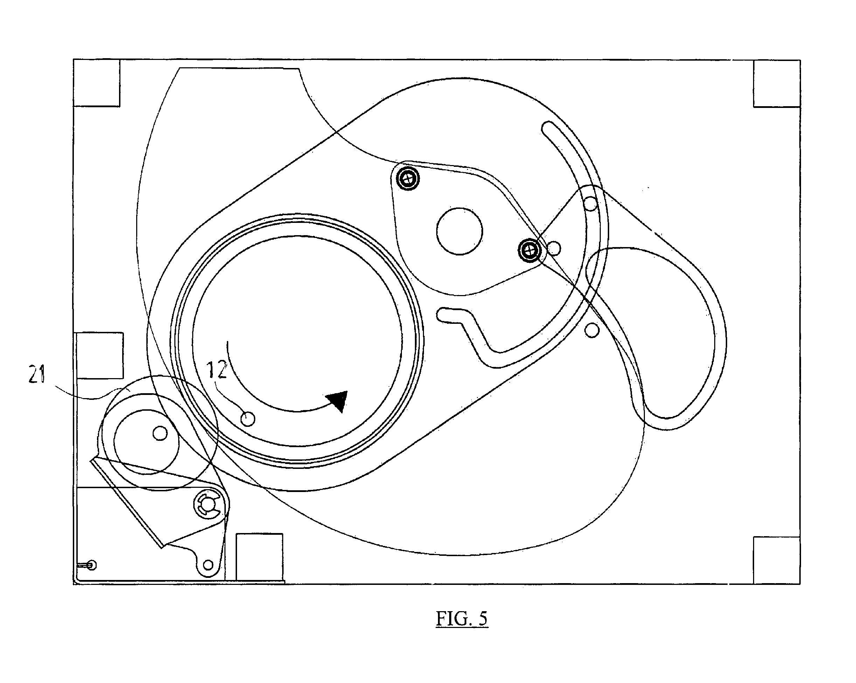

Les moyens de mise en rotation propre sont atteints en figure 4 au niveau de laquelle un galet 21 vient en appui sur le pourtour extérieur du corps de la cartouche 10. Cette coopération s'effectue avantageusement au niveau de la bague inférieure 13b telle que visible en figure 2. En effet, cette surface a un frottement supérieur de sorte à optimiser l'entraînement. La motorisation 22 entraînant le galet 21 en rotation permet l'actionnement en rotation propre de la cartouche 10 apparaissant en figure 5. L'objectif de cette mise en rotation propre est de placer l'axe de pivot 12 du couvercle 11 dans une position angulaire prédéterminée dans laquelle l'ouverture du couvercle 11 sera ensuite facilitée.

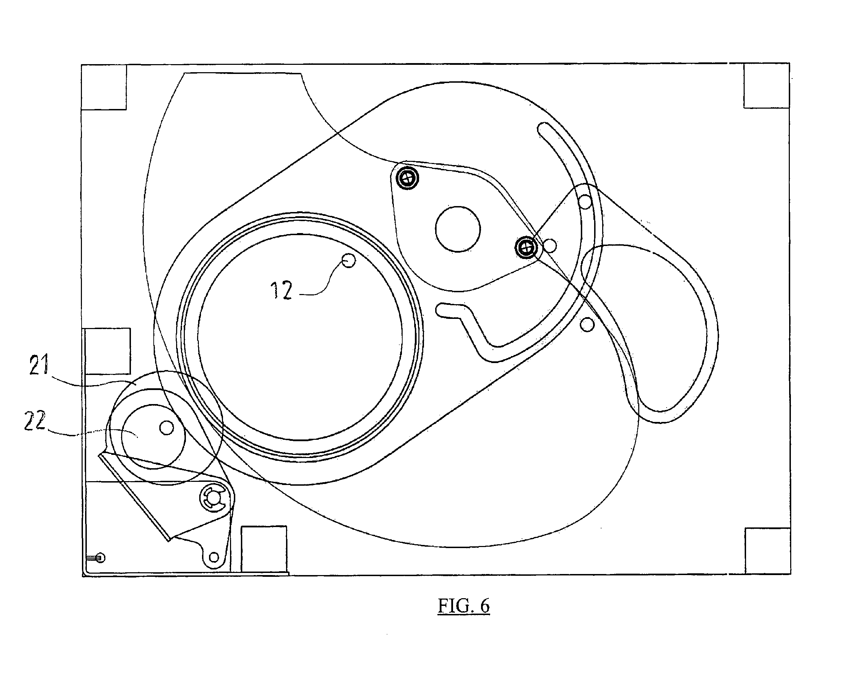

La figure 6 illustre le placement de l'axe 12 dans une position angulaire prédéterminée adéquate à cet effet. L'axe 12 est avantageusement métallique ce qui facilite la détection. Cependant, une détection optique, ou autre est possible. L'axe 12 est localisé soit directement, soit indirectement par un élément dont on connaît la position angulaire relativement à l'axe 12. En particuiier, on peut utiliser des cartouches 10 dotées d'un couvercle inférieur articulé par un axe colinéaire à l'axe 12 si bien que la détection de l'axe du couvercle inférieur donne immédiatement la portion de l'axe 12. Cette configuration offre certaines souplesses pour la conception et l'encombrement des éléments. Ainsi, pour détecter la présence de l'axe 12 à ce niveau, le capteur 32 est avantageusement positionné en regard de cette zone de sorte à déclencher une commande d'arrêt de la motorisation 22 lorsque la présence de l'axe du couvercle inférieur est détectée. Avantageusement, le pivot du couvercle 11 s'effectue par un axe métallique et le capteur 32 est un capteur inductif.

Lorsque la position de la figure 6 est atteinte, le mouvement du barillet 14 reprend de sorte à diriger la cartouche 10 vers la zone de chargement 3. On notera que le mouvement de rotation du barillet 14 et le mouvement de rotation du plateau 7 peuvent être opérés au moyen d'un même axe 20.

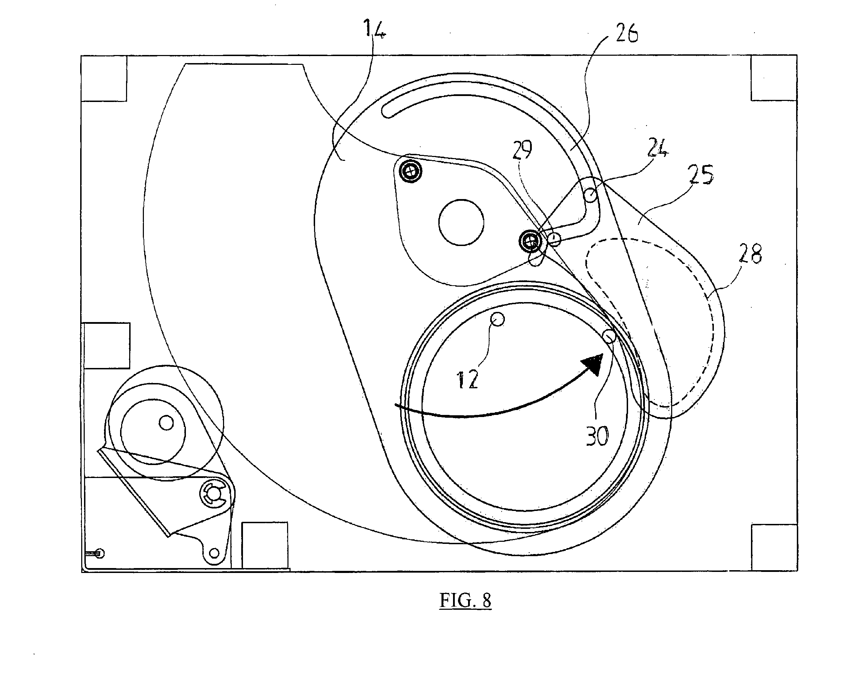

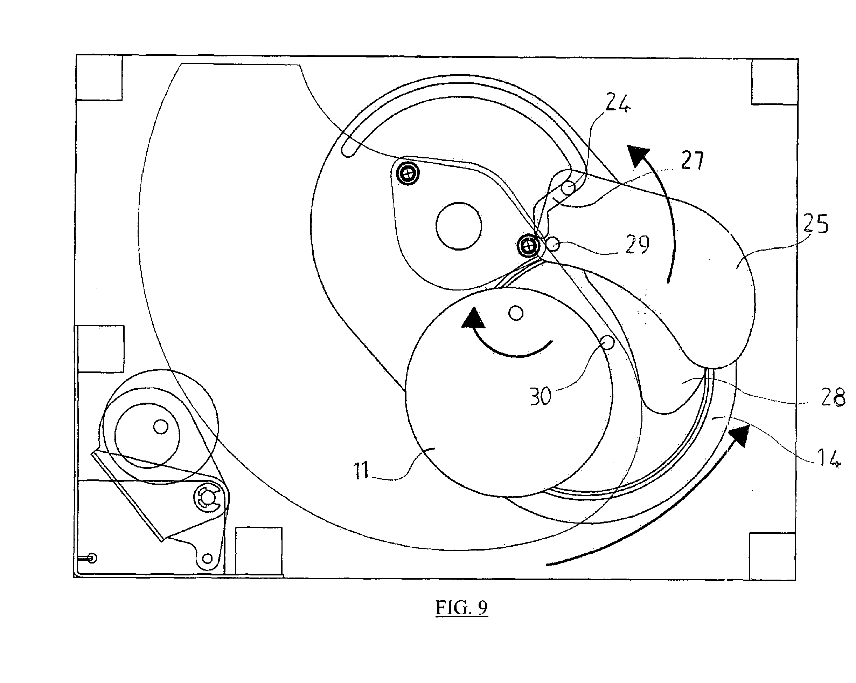

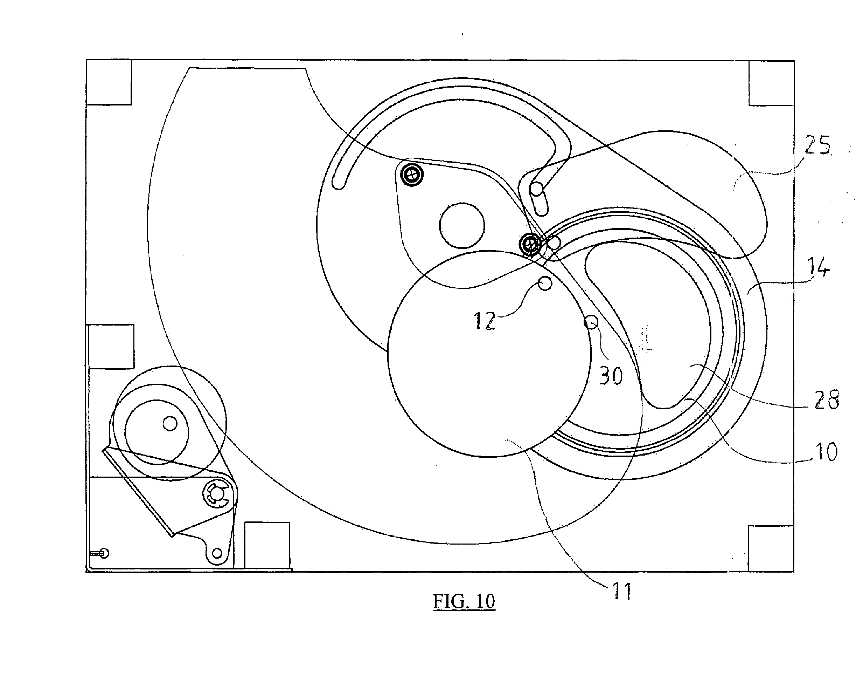

En figure 8, le barillet 14 est sur le point d'entrer dans la zone de chargement 3. La zone de chargement 3 comporte des moyens d'obturation de la bouche 28 de l'entrée 6 représentés sous forme d'un capot 25 mobile en rotation suivant un axe 29. Pour commander l'ouverture du capot 25 à l'arrivée de la cartouche 10 dans la zone de chargement 3, l'exemple ici décrit comporte un chemin de guidage 23 formé dans le flasque supérieur 15 du barillet 14 pour coopérer avec un doigt 24 solidaire du capot 25 et décalé relativement à l'axe 29. On comprend que le déplacement du doigt 24 engendre un mouvement correspondant de l'ensemble du capot 25. Le chemin de guidage 23 comporte une portion circulaire 26 prévue pour suivre le déplacement en rotation du barillet 14 suivant une première phase de fonctionnement sans entraîner le capot 25. Le chemin de guidage 23 comporte par ailleurs une partie d'actionnement 27 en rupture suivant la trajectoire du barillet 14 en rotation de sorte à produire un mouvement du capot 25. Le capot 25 s'ouvre alors progressivement depuis la position de la figure 8 en passant par celle de la figure 9 jusqu'à atteindre une position ouverte illustrée en figure 10.

Simultanément, le couvercle 11 est ouvert par l'intermédiaire d'un appui entre une butée 30 et la tranche du couvercle 11. Les flèches de la figure 9 montrent respectivement le mouvement de rotation du barillet 14, le mouvement d'ouverture du capot 25 et le pivot du couvercle 11.

En figure 10, le couvercle 11 est suffisamment escamoté pour que la bouche 28 autorise le passage des produits 9 entre l'entrée 6 et le volume intérieur de la cartouche 10, s'effectue alors le chargement tel qu'illustré en figure 11.

Le capteur 31 (par exemple inductif) détecte un niveau de remplissage prédéterminé. L'automatisme lance alors la phase d'évacuation de la cartouche 10 pleine.

On décrit ci-après un mouvement de retour réalisable au moyen de la station selon l'invention et dans lequel la cartouche 10 retourne depuis la zone de chargement 3 jusqu'à la zone de transit 2.

De façon inverse aux étapes précédentes, le mouvement du barillet 14 dans un sens opposé assure le retour en position du capot 25 obturant la bouche 28. Afin d'éviter de bloquer le capot 25 dans sa rotation (notamment par l'arrivée de produits 9 qui pourraient coincer à ce niveau) la rotation du barillet 14 est conditionnée par une période de non arrivée de produits 9.

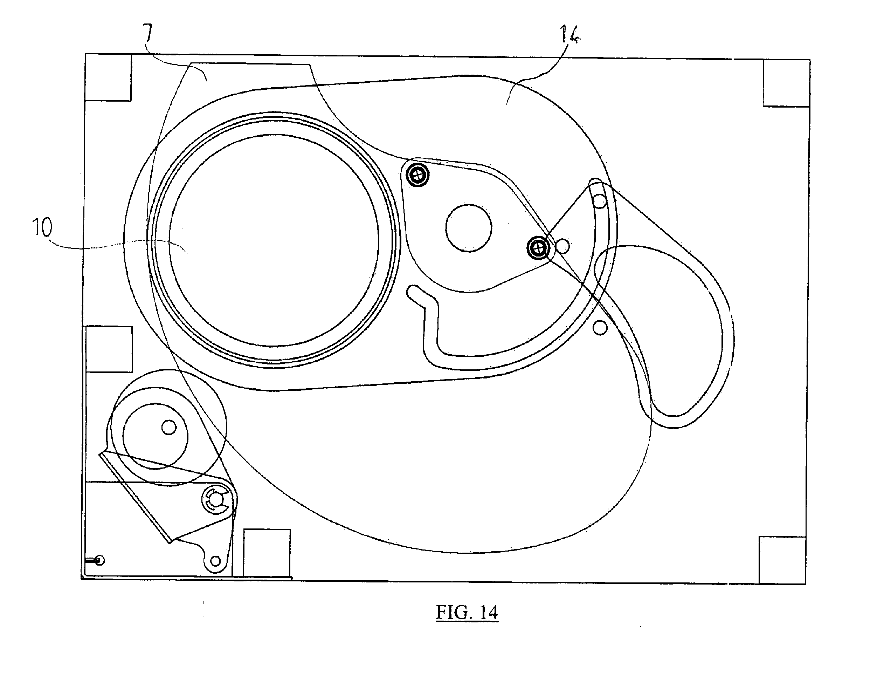

La cartouche 10 atteint progressivement la zone de transit 2 au niveau de laquelle une butée 33 complémentaire à la butée 30 assure l'appui du couvercle 11 et sa fermeture par son retour en position au-dessus de la cartouche 10. On atteint alors la configuration de la figure 14 où la cartouche 10 est en attente d'émission dans le circuit pneumatique.

Sur instruction du réseau de convoyage pneumatique, se produit ensuite un déplacement du plateau 7 pour libérer l'embouchure 4 et envoyer la cartouche 10 dans le circuit pneumatique.

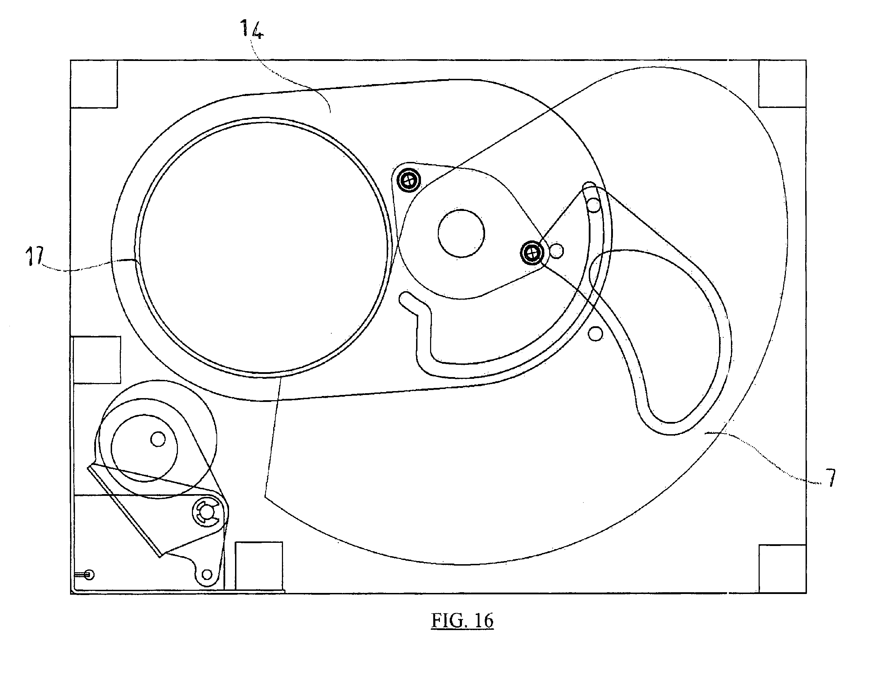

La station reprend alors la configuration de la figure 16 d'attente d'émission ou de réception de cartouche 10 correspondant à la figure 1.

On notera que l'ensemble de ces opérations s'effectue dans un volume restreint en combinant à la fois le mouvement de cartouche 10 entre une position de transit et une position de chargement et le mouvement d'ouverture du couvercle 11.

Le cas illustré comprend une butée complémentaire 33 pour le retour en position du couvercle 11 mais d'autres moyens de retour en position sont envisageables notamment des moyens de rappel élastiques solidaires du couvercle 11.

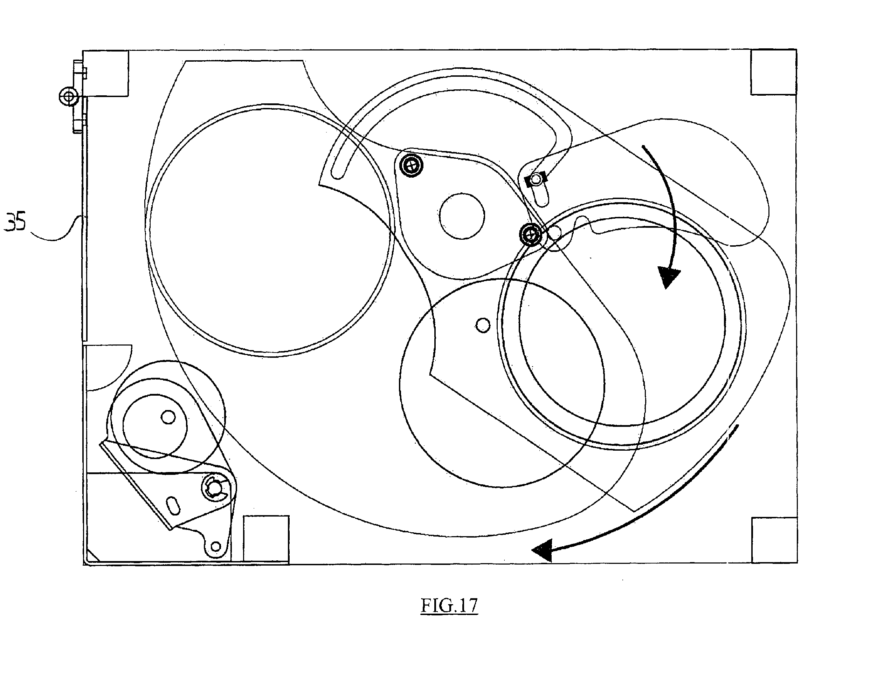

Les figures 17 à 20 montrent une variante de l'invention selon laquelle l'accès à la zone de transit 2 est autorisé lorsque la cartouche 10 a subi un déplacement en direction de la zone de chargement 3. Le mouvement du déplacement, par le barillet 14, est similaire à celui précédemment décrit et correspond à la figure 17, le plateau 7 étant présent dans la zone de transit 2 : à partir de la zone de chargement 3, la cartouche 10 est ainsi légèrement décalée vers une position intermédiaire entre les deux zones 2, 3.

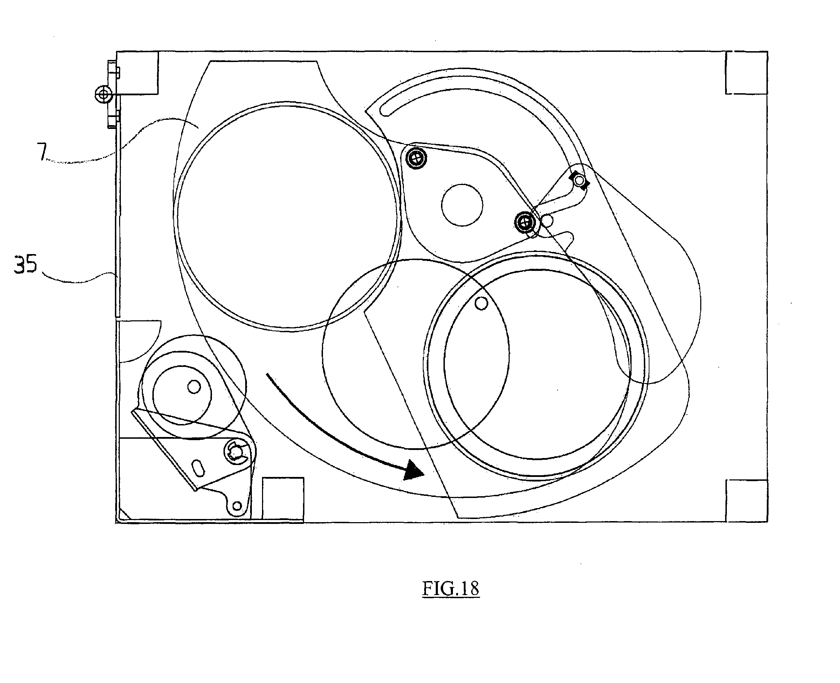

Le plateau 7 subit ensuite une rotation pour libérer l'accès à l'embouchure 4 de la zone de transit 2 comme la flèche de la figure 18 l'illustre.

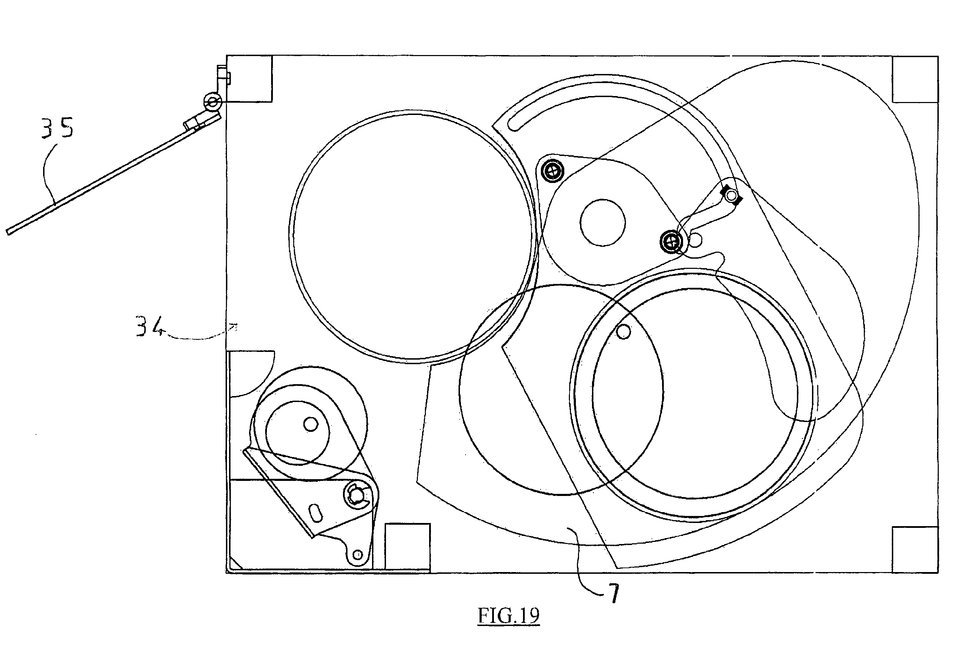

En figure 19, l'accès au réseau pneumatique est libéré et l'opérateur peut ouvrir la porte 35 pour placer une cartouche dans l'embouchure 4.

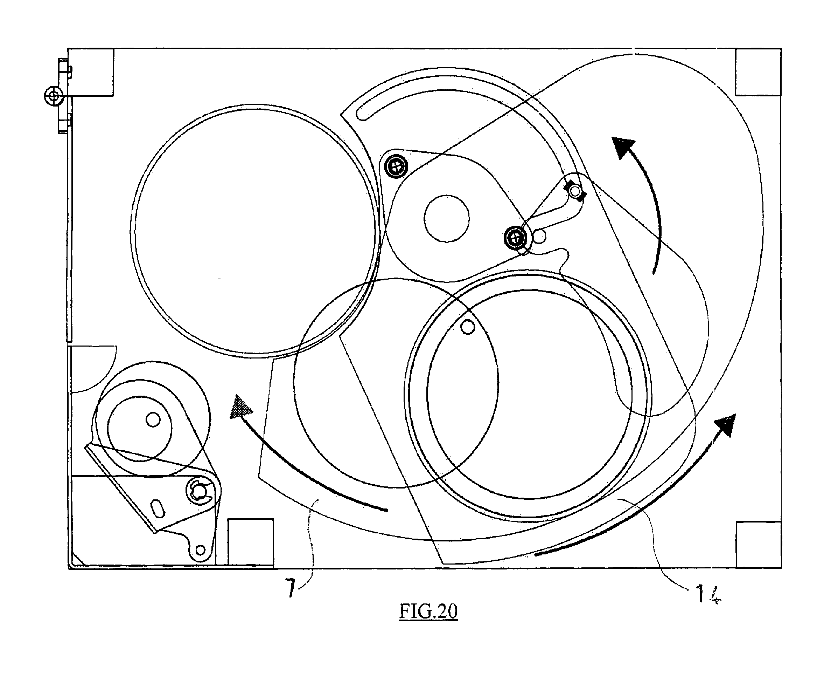

Après avoir refermé la porte 35 et après envoi de la cartouche dans le réseau, les éléments de la station reprennent la position de remplissage illustrée à la figure 20.

### REFERENCES

- 1.: Enceinte
- 2.: Zone de transit
- 3.: Zone de chargement
- 4.: Embouchure de raccordement au circuit pneumatique
- 5.: Portion d'arrêt
- 6.: Entrée
- 7.: Plateau
- 8.: Motorisation du plateau
- 9.: Produits
- 10.: Cartouche
- 11.: Couvercle
- 12.: Axe de pivot du couvercle
- 13a, 13b.: Bagues d'étanchéité et de glissement
- 14.: Barillet
- 15.: Flasque supérieur du barillet
- 16.: Flasque inférieur du barillet
- 17.: Réceptacle tubulaire
- 18.: Motorisation du barillet
- 19.: Axe longitudinal du réceptacle tubulaire
- 20.: Axe de rotation du barillet
- 21.: Galet presseur
- 22.: Motorisation de rotation propre de la cartouche
- 23.: Chemin de guidage
- 24.: Doigt d'entraînement du capot
- 25.: Capot
- 26.: Portion circulaire
- 27.: Partie d'actionnement
- 28.: Bouche d'admission de produits
- 29.: Axe de rotation du capot
- 30.: Butée
- 31.: Capteur de détection de niveau
- 32.: Capteur d'orientation cartouche
- 33.: Butée complémentaire
- 34.: Voie d'introduction manuelle
- 35.: Porte

## Revendications

1. Station de transfert apte à recevoir une cartouche (10) pneumatique munie d'un couvercle (11) monté pivotant suivant un axe parallèle à l'axe longitudinal (19) de la cartouche (10), la station comportant une zone de transit (2) de la cartouche (10) apte à coopérer avec un circuit de convoyage pneumatique, la station comportant une butée (30) configurée pour pousser le couvercle (11) de la cartouche (10) depuis une position fermée vers une position ouverte,
**caractérisée par le fait que** la butée (30) est fixe et la station comporte des moyens de déplacement de la cartouche (10) suivant un plan orthogonal à son axe longitudinal (19).

2. Station selon la revendication 1 dans laquelle les moyens de déplacement sont des moyens de débattement angulaire.

3. Station selon la revendication 2 dans laquelle la butée (30) est positionnée sur la trajectoire en rotation du centre de gravité du couvercle (11)

4. Station selon la revendication 2 ou 3 dans laquelle les moyens de débattement angulaire comportent un barillet (14) d'entraînement de la cartouche (10).

5. Station selon l'une des revendications 1 à 4, comportant des moyens de mise en rotation propre de la cartouche (10) autour de son axe longitudinal (19) jusqu'à une position prédéterminée de l'axe de pivot (12) du couvercle (11).

6. Station selon l'une des revendications 1 à 5, comportant une zone de chargement (3), les moyens de déplacement étant configurés pour déplacer la cartouche (10) entre la zone de transit (2) et la zone de chargement (3).

7. Station selon la revendication 6 dans laquelle la zone de chargement (3) comporte une entrée (6) de produit (9) et des moyens d'obturation de l'entrée (6) commandés de sorte à s'escamoter lorsque la cartouche (10) est située en vis-à-vis de l'entrée (6).

8. Station selon la revendication 7 dans laquelle les moyens d'obturation sont commandés par des moyens d'entraînement solidarisés au barillet (14).

9. Station selon la revendication 8 dans laquelle les moyens d'entraînement comportent un chemin de guidage (23) d'un doigt (24) solidaire d'un capot (25) des moyens d'obturation.

10. Station selon l'une des revendications 1 à 9 comportant une voie d'introduction manuelle d'une cartouche dans la zone de transit (2).

11. Station selon l'une quelconque des revendications précédentes présentant une butée complémentaire (33) configurée pour pousser le couvercle (11) de la cartouche (10) depuis la position ouverte vers la position fermée.

12. Station selon la revendication 11 dans laquelle la butée complémentaire (33) est localisée dans la zone de transit (2).

13. Station selon l'une quelconque des revendications précédente, comportant un plateau (7) mobile entre une position d'ouverture de l'embouchure (4) de la zone de transit (2) et une position de fermeture.

14. Procédé de chargement d'une cartouche (10) pneumatique utilisant une station de transfert selon l'une des revendications précédentes, comportant les étapes suivantes :
- Réception de la cartouche (10) dans la zone de transit (2),
- Mise en rotation propre de la cartouche de sorte à lui conférer une portion angulaire prédéterminée,
- Déplacement de la cartouche (10) selon un plan orthogonal à son axe longitudinal (19) et, simultanément, mise en appui du couvercle (11) de la cartouche (10) sur une butée (30) pour pousser le couvercle (11) depuis une position fermée vers une position ouverte.

15. Procédé selon la revendication 14 dans laquelle le déplacement de la cartouche (10) est configuré pour autoriser l'introduction manuelle d'une autre cartouche dans la zone de transit (2).

## Claims

1. A transfer station capable of receiving a pneumatic cartridge (10) provided with a lid (11) mounted such as to pivot about a pin parallel to the longitudinal axis (19) of the cartridge (10), the station comprising a transit area (2) of the cartridge (10) capable of engaging with a pneumatic conveyor circuit, the station comprising an abutment (30) configured for pushing the lid (11) of the cartridge (10) from a closed position to an open position,
**characterised in that** the abutment (30) is stationary and **in that** the station comprises a means for moving the cartridge (10) according to a plane orthogonal to the longitudinal axis (19) thereof.

2. Station according to claim 1 wherein the movement means is an angular displacement means.

3. Station according to claim 2 wherein the abutment (30) is positioned on the path of rotation of the centre of gravity of the lid (11).

4. Station according to claim 2 or 3 wherein the angular displacement means comprises a cylinder (14) for driving the cartridge (10).

5. Station according to one of the claims 1 to 4, comprising a means for rotating the actual cartridge (10) about the longitudinal axis (19) thereof into a predetermined position of the pivoting pin (12) of the lid (11).

6. Station according to one of the claims 1 to 5, comprising a loading area (3), the movement means being configured to move the cartridge (10) between the transit area (2) and the loading area (3).

7. Station according to claim 6 wherein the loading means (3) comprises a product (9) intake (6) and a means for blocking the intake (6) controlled such as to retract when the cartridge (10) is placed opposite the intake (6).

8. Station according to claim 7 wherein the blocking means is controlled by a driving means secured to the cylinder (14).

9. Station according to claim 8 wherein the driving means comprises a path (23) for guiding a pawl (24) secured to a lid (25) of the blocking means.

10. Station according to one of the claims 1 to 9 comprising a track for manually inserting a cartridge in the transit area (2).

11. Station according to any preceding claim having a complementary abutment (33) configured for pushing the lid (11) of the cartridge (10) from the open position to the closed position.

12. Station according to claim 11 wherein the complementary abutment (33) is located in the transit area (2).

13. Station according to any preceding claim comprising a plate (7) mobile between a position for opening the mouth (4) of the transit area (2) and a closing position.

14. A method for loading a pneumatic cartridge (10) using a transfer station according to one of the preceding claims, comprising the following steps:
- receiving the cartridge (10) in the transit area (2),
- rotating the actual cartridge such as to confer on same a predetermined angular portion,
- moving the cartridge (10) according to a plane orthogonal to the longitudinal axis (19) thereof and, simultaneously, engaging the lid (11) of the cartridge (10) with an abutment (30) in order to push the lid (11) from a closed position into an open position.

15. Method according to claim 14 wherein the movement of the cartridge (10) is configured to allow manual insertion of another cartridge in the transit area (2).

## Patentansprüche

1. Transferstation, die geeignet ist, um eine pneumatische Kartusche (10) aufzunehmen, die mit einem Deckel (11) versehen ist, der schwenkbar gemäß einer zur Längsachse (19) der Kartusche (10) parallelen Achse montiert ist, wobei die Station einen Übergangsbereich (2) der Kartusche (10) umfasst, der geeignet ist, mit einem pneumatischen Beförderungskreislauf zusammenzuwirken, wobei die Station einen Anschlag (30), der zum Schieben des Deckels (11) der Kartusche (10) von einer geschlossenen Position in eine offene Position konfiguriert ist, umfasst, **dadurch gekennzeichnet, dass** der Anschlag (30) fest ist und die Station Verschiebungsmittel der Kartusche (10) gemäß einer zu ihrer Längsachse (19) orthogonalen Ebene umfasst.

2. Station gemäß Anspruch 1, in der die Verschiebungsmittel winkelförmige Ausschlagsmittel sind.

3. Station gemäß Anspruch 2, in der der Anschlag (30) auf der Bahn in Rotation des Schwerpunkts des Deckels (11) positioniert ist.

4. Station gemäß Anspruch 2 oder 3, in der die winkelförmigen Ausschlagsmittel einen Antriebszylinder (14) der Kartusche (10) umfassen.

5. Station gemäß Anspruch 1 bis 4, umfassend eigene Antriebsmittel der Kartusche (10) in Rotation um ihre Längsachse (19) bis zu einer vorbestimmten Position der Schwenkachse (12) des Deckels (11).

6. Station gemäß Anspruch 1 bis 5, umfassend einen Ladebereich (3), wobei die Verschiebungsmittel konfiguriert sind, um die Kartusche (10) zwischen dem Übergangsbereich (2) und dem Ladebereich (3) zu verschieben.

7. Station gemäß Anspruch 6, in der der Ladebereich (3) einen Eingang (6) des Produkts (9) und Verschlussmittel des Eingangs (6) umfasst, die derart gesteuert sind, dass sie eingefahren werden, wenn die Kartusche (10) sich gegenüber dem Eingang (6) befindet.

8. Station gemäß Anspruch 7, in der die Verschlussmittel durch am Zylinder (14) fest befestigte Antriebsmittel gesteuert werden.

9. Station gemäß Anspruch 8, in der die Antriebsmittel einen halben Führungsweg (23) eines fest mit einer Haube (25) der Verschlussmittel befestigten Fingers (24) umfassen.

10. Station gemäß Anspruch 1 bis 9, umfassend einen manuellen Einführweg einer Kartusche in den Übergangsbereich (2).

11. Station gemäß einem der voranstehenden Ansprüche, die einen komplementären Anschlag (33) aufweist, der konfiguriert ist, um den Deckel (11) der Kartusche (10) von der offenen Position in die geschlossene Position zu schieben.

12. Station gemäß Anspruch 11, in der der komplementäre Anschlag (33) sich im Übergangsbereich (2) befindet.

13. Station gemäß einem der voranstehenden Ansprüche, umfassend eine mobile Platte (7) zwischen einer Öffnungsposition der Einmündung (4) des Übergangsbereichs (2) und einer Verschlussposition.

14. Ladeverfahren einer pneumatischen Kartusche (10), das eine Transferstation gemäß einem der voranstehenden Ansprüche verwendet, umfassend die folgenden Schritte:
- Aufnahme der Kartusche (10) im Übergangsbereich (2),
- Antreiben der Kartusche in eigener Drehung derart, dass ihr ein vorbestimmter winkelförmiger Abschnitt verliehen wird,
- Verschiebung der Kartusche (10) gemäß einer orthogonalen Ebene zu ihrer Längsachse (19) und gleichzeitig Aufstützen des Deckels (11) der Kartusche (10) auf einem Anschlag (30), um den Deckel (11) von einer geschlossenen Position in eine offene Position zu schieben.

15. Verfahren gemäß Anspruch 14, in dem die Verschiebung der Kartusche (10) konfiguriert ist, um die manuelle Einführung einer anderen Kartusche in den Übergangsbereich (2) zu erlauben.
